# EUROPÄISCHE PATENTSCHRIFT

(11) **EP 0 948 501 B1**
(45) Veröffentlichungstag und Bekanntmachung des Hinweises auf die Patenterteilung: **14.02.2001**
(21) Anmeldenummer: 97953847.7
(22) Anmeldetag: 18.12.1997
(51) Int. Cl.: C07F 7/10, C07F 7/08, C08K 5/54, C08G 77/54, C08G 77/48

(54) **HARNSTOFFGRUPPEN AUFWEISENDE ORGANOSILICIUMVERBINDUNGEN, DEREN HERSTELLUNG SOWIE DEREN VERWENDUNG**
ORGANOSILICON COMPOUNDS HAVING UREA GROUPS, METHOD FOR PRODUCING SAME AND THEIR UTILIZATION
COMPOSES ORGANOSILICIQUES COMPORTANT DES GROUPES UREE, LEUR PROCEDE DE PREPARATION ET LEUR UTILISATION

(30) Priorität: 27.12.1996 DE 19654556
(43) Veröffentlichungstag der Anmeldung: 13.10.1999
(73) Patentinhaber: Wacker-Chemie GmbH, 81737 München (DE)
(72) Erfinder: OBERNEDER, Stefan, D-84489 Burghausen (DE); HECHTL, Wolfgang, D-84489 Burghausen (DE); PILZWEGER, Erich, D-84387 Julbach (DE); FILUSCH, Doris, D-84489 Burghausen (DE); STEPP, Michael, D-84489 Burghausen (DE)
(74) Vertreter: Budczinski, Angelika
(86) Internationale Anmeldenummer: EP9707107
(87) Internationale Veröffentlichungsnummer: WO9829418

(56) Entgegenhaltungen:
- EP-A- 0 400 439
- WO-A-94/14820
- US-A- 4 506 058

## Beschreibung

Die Erfindung betrifft Organosiliciumverbindungen, die über Si-N-Bindungen verknüpfte Harnstoffgruppen aufweisen, deren Herstellung sowie deren Verwendung.

Silylierungsprodukte von Harnstoff, wie z.B. N,N'-Bis(trimethylsilyl)harnstoff und dessen Derivate, sind bereits bekannt. Hierzu sei etwa auf US 3,346,609 (General Electric Co.; ausgegeben am 10.10.1967) verwiesen. In US 3,239,489 (Monsanto Co.; ausgegeben am 8.3.1966) werden Polymere beschrieben, die aus der Sequenz - Silan-Einheit - Harnstoff-Einheit - Kohlenwasserstoffkette - bestehen, die durch Umsetzung von Silazanen mit Diisocyanaten hergestellt werden. Des weiteren werden in US 4,959,407 (General Electric Co.; ausgegeben am 25.09.1990) durch Harnstoffeinheiten endblockierte Siloxanketten mit maximal 10 Siloxaneinheiten als Kettenverlängerer offenbart.

Gegenstand der Erfindung sind Organosiliciumverbindungen mit mindestens drei Siliciumatomen aus Einheiten der Formel

RₐSi(NR¹C=ONR² ₂)ₖ(NR³C=ONR⁴)_{t/2}YₘO_{n/2}[(CR⁵ ₂)ₛ]_{r/2} (I)

mit Y gleich Einheiten der Formel

-SiR⁶ _{3-p-q}(NR¹C=ONR² ₂)ₚ(NR³C=ONR⁴)_{q/2} (II)

wobei R, R¹, R², R³, R⁴, R⁵ und R⁶ unabhängig voneinander jeweils gleich oder verschieden sein können und Wasserstoffatom oder gegebenenfalls substituierte einwertige Kohlenwasserstoffreste mit 1 bis 20 Kohlenstoffatomen bedeuten,
a 0, 1, 2 oder 3 ist,
k 0, 1, 2 oder 3 ist,
t 0, 1, 2, 3 oder 4 ist,
n 0, 1, 2, 3 oder 4 ist,
m 0 oder 1 ist,
r 0 oder 1 ist,
s eine ganze Zahl von 1 bis 20 darstellt,
p 0, 1, 2 oder 3 ist und
q 0, 1, 2 oder 3 ist, mit der Maßgabe, daß
   - die Summe p + q ≤ 3 ist,
   - die Summe a + k + t + m + n + r gleich 4 ist,
   - die Summe m + r gleich 0 oder 1 ist und
   - die erfindungsgemäße Organosiliciumverbindung mindestens eine Einheit der Formel (I) mit t verschieden 0 enthält.

Obwohl durch die Formeln (I) und (II) ausgedrückt, soll nochmals festgehalten werden, daß es sich bei den mit den Indices a, k, t, m, n, r, p und q gekennzeichneten Resten sämtlich um Si-gebundene Reste handelt und die Reste -(NR³C=ONR⁴)-, -O- und -(CR⁵ ₂)ₛ- jeweils 2 Si-Bindungen aufweisen.

Vorzugsweise ist in den Einheiten der Formel (I) die Summe k + t + n verschieden 0.

Beispiele für Kohlenwasserstoffreste R und R⁶ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R und R⁶ sind halogenierte Reste, wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest und der Perfluorisopropyloxypropylrest; durch Aminogruppen substituierte Reste, wie der N-(2-aminoethyl)-3-aminopropylrest, der 3-Aminopropylrest, der 3-(Cyclohexylamino)propylrest, 3-(N,N-Diethyl-2-aminoethylamino)propylrest, 3-(Butylamino)propylrest und 3-(3-Methoxypropylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest; schwefelfunktionelle Reste, wie der 3-Mercaptopropylrest; und mit (Poly)glykolgruppen substituierte Reste, wobei letztere aus Oxyethylen- und/oder Oxypropyleneinheiten aufgebaut sein können.

Bevorzugt als Reste R und R⁶ sind jeweils unabhangig voneinander Kohlenwasserstoffreste mit 1 bis 10 Kohlenstoffatomen, mit Aminogruppen oder mit Fluorresten substituierte Kohlenwasserstoffreste mit 1 bis 10 Kohlenstoffatomen sowie um über Alkylenreste mit 2 bis 6 Kohlenstoffatomen mit dem Siliciumatom verbundene, gegebenenfalls substituierte Amino- und Glycidoxygruppen.

Besonders bevorzugt handelt es sich bei den Resten R und R⁶ jeweils unabhangig voneinander um Alkylreste und Alkenylreste mit 1 bis 4 Kohlenstoffatomen, wie den Methyl- und den Vinylrest, sowie um über Alkylenreste mit 2 bis 6 Kohlenstoffatomen mit dem Siliciumatom verbundene, gegebenenfalls substituierte Amino- und Glycidoxygruppen, wie z.B. der 3-(2-Aminoethylamino)propyl-Rest, der 3-(Cyclohexylamino)propyl-Rest oder der 3-(Glycidoxy)propylrest.

Insbesondere handelt es sich sowohl bei R als auch bei R⁶ um den Methylrest.

Beispiele für Reste R¹, R², R³ und R⁴ gleich gegebenenfalls substituierte Kohlenwasserstoffreste sind die oben für Rest R und R⁶ angegebenen Beispiele.

Bevorzugte Reste R¹, R², R³ und R⁴ sind jeweils unabhängig voneinander Wasserstoff sowie Kohlenwasserstoffreste mit 1 bis 10 Kohlenstoffatomen.

Besonders bevorzugt handelt es sich bei den Resten R¹, R², R³ und R⁴ unabhängig voneinander um Wasserstoffatom sowie den Methylrest.

Beispiele für Rest R⁵ sind die oben für Rest R und R⁶ angegebenen Beispiele.

Bevorzugt handelt es sich bei Rest R⁵ um Wasserstoffatom und Kohlenwasserstoffreste mit 1 bis 10 Kohlenstoffatome sowie aminofunktionelle und fluorsubstituierte Kohlenwasserstoffreste, wobei R⁵ besonders bevorzugt Wasserstoffatom ist.
a ist bevorzugt 1, 2 oder 3.
k ist bevorzugt 0, 1 oder 2.
t ist bevorzugt 1, 2 oder 3.
n ist bevorzugt 1 oder 2.
s ist bevorzugt 2.
p ist bevorzugt 0, 1 oder 2.
q ist bevorzugt 1 oder 2.

Beispiele für Einheiten der Formel (I) sind
1a) Me₃Si(NH-C=O-NH)_{1/2}; Me₂Si(NH-C=O-NH)_{2/2}; MeSi(NH-C=O-NH)_{3/2}; Si(NE-C=O-NH)_{4/2};
1b) Me₃Si(NMe-C=O-NMe)_{1/2}; Me₂Si(NMe-C=O-NMe)_{2/2}; MeSi(NMe-C=O-NMe)_{3/2}; Si(NMe-C=O-NMe)_{4/2};
2) Me₃SiO_{1/2}; Me₂SiO_{2/2}; MeSiO_{3/2}; SiO_{4/2};
3) Me₃Si [SiMe(NH-C=O-NH)_{1/2}(NH-C=O-NH₂)]; Me₃Si[SiMe(NH-C=O-NH)_{2/2}]; Me₃Si[SiMe₂(NH-C=O-NH)_{1/2}];
4) Me₃Si[(CMe₂)ₛ]_{1/2};
5) Me₂Si(NH-C=O-NH)_{1/2}(NH-C=O-NH₂); MeSi(NH-C=O-NH)_{2/2}(NH-C=O-NH₂); MeSi(NH-C=O-NH)_{1/2}(NH-C=O-NH₂)₂; Si(NH-C=O-NH)_{3/2}(NH-C=O-NH₂); Si(NH-C=O-NH)_{2/2}(NH-C=O-NH₂)₂; Si(NH-C=O-NH)_{1/2}(NH-C=O-NH₂)₃;
6) Me₂Si(NH-C=O-NH)_{1/2}O_{1/2}; MeSi(NH-C=O-NH)_{2/2}O_{1/2}; MeSi(NH-C=O-NH)_{1/2}O_{2/2}; Si(NH-C=O-NH)_{3/2}O_{1/2}; Si(NH-C=O-NH)_{2/2}O_{2/2}; Si(NH-C=O-NH)_{1/2}O_{3/2};
7) Me₂Si[Sime(NH-C=O-NH)_{1/2}(NH-C=O-NH₂)](NH-C=O-NH)_{1/2}; Me₂Si[SiMe(NH-C=O-NH)_{2/2}](NH-C=O-NH)_{1/2}; Me₂Si[SiMe₂(NH-C=O-NH)_{1/2})(NH-C=O-NH)_{1/2}; Me₂Si[SiMe₂(NH-C=O-NH₂)](NH-C=O-NH)_{1/2}; MeSi[Sime(NH-C=O-NH)_{1/2}(NH-C=O-NH₂)](NH-C=O-NH)_{2/2}; MeSi[SiMe(NH-C=O-NH)_{2/2})(NH-C=O-NH)_{2/2}; Si[SiMe(NH-C=O-NH)_{1/2}(NH-C=O-NH₂)](NH-C=O-NH)_{3/2}; Si[SiMe(NH-C=O-NH)_{2/2})(NH-C=O-NH)_{3/2};
8) Me₂Si[(CMe₂)ₛ]_{1/2}(NH-C=O-NH)_{1/2}; MeSi[(CMe₂)ₛ]_{1/2}(NH-C=O-NH)_{2/2}; Si[(CMe₂)ₛ]_{1/2}(NH-C=O-NH)_{3/2}; mit s = 1 bis 20
9) Me₂SiO_{1/2}(NH-C=O-NH₂); MeSiO_{2/2} (NH-C=O-NH₂); MeSiO_{1/2}(NH-C=O-NH₂)₂; SiO_{3/2}(NH-C=O-NH₂); SiO_{2/2}(NH-C=O-NH₂)₂; SiO_{1/2}(NH-C=O-NH₂)₃;
10) Me₂Si[SiMe(NH-C=O-NH)_{1/2}(NH-C=O-NH₂)](NH-C=O-NH₂); Me₂Si[SiMe(NH-C=O-NH)_{2/2}](NH-C=O-NH₂); Me₂Si[SiMe₂(NH-C=O-NH)_{1/2}](NH-C=O-NH₂); Me₂Si[SiMe₂(NH-C-O-NH₂)](NH-C=O-NH₂); MeSi[SiMe(NH-C=O-NH)_{1/2}(NH-C=O-NH₂)](NH-C=O-NH₂)₂; MeSi[SiMe(NH-C=O-NH)_{2/2})(NH-C=O-NH₂)₂; Si[SiMe(NH-C=O-NH)_{1/2}(NH-C=O-NH₂)](NH-C=O-NH₂)₃; Si[SiMe(NH-C=O-NH)_{2/2}](NH-C=O-NH₂)₃;
11) Me₂Si[(CMe₂)ₛ]_{1/2}(NH-C=O-NH₂); MeSi[(CMe₂)ₛ]_{1/2}(NH-C=O-NH₂)₂; Si[(CMe₂)ₛ]_{1/2}(NH-C=O-NH₂)₃; mit s = 1 bis 20
12) Me₂Si[SiMe(NH-C=O-NH)_{1/2}(NH-C=O-NH₂)]O_{1/2}; Me₂Si[SiMe(NH-C=O-NH)_{2/2}]O_{1/2}; Me₂Si[SiMe₂ (NH-C=O-NH) _{1/2}]O_{1/2}; Me₂Si[SiMe₂ (NH-C=O-NH₂)]O_{1/2}; Me₂Si[SiMe(NH-C=O-NH)_{1/2}O_{1/2}]O_{1/2}; Me₂Si[SiMeO_{2/2}]O_{1/2}; Me₂Si[SiMe(NH-C=O-NH₂)O_{1/2}]O_{1/2}; Me₂Si[SiMe₂O_{1/2}]O_{1/2}; MeSi[SiMe(NH-C=O-NH)_{1/2}(NH-C=O-NH₂)]O_{2/2}; MeSi[SiMe(NH-C=O-NH)_{2/2}]O_{2/2}; MeSi[SiMe(NH-C=O-NH)_{1/2}O_{1/2}]O_{2/2}; MeSi[Sime(NH-C=O-NH₂)O_{1/2}]O_{2/2}; MeSi[SiMeO_{2/2}]O_{2/2}; Si[SiMe(NH-C=O-NH)_{1/2}(NH-C=O-NH₂)]O_{3/2}; Si[SiMe(NH-C=O-NH)_{2/2}]O_{3/2}; Si[SiMe(NH-C=O-NH)_{1/2}O_{1/2}]O_{3/2}; Si[Sime(NH-C=O-NH₂)O_{1/2}]O_{3/2}; Si[SiMeO_{2/2}]O_{3/2};
13) Me₂Si[(CMe₂)ₛ]_{1/2}O_{1/2}; MeSi[(CMe₂)ₛ]_{1/2}O_{2/2}; Si[(CMe₂)ₛ]_{1/2}O_{3/2}; mit s = 1 bis 20
14) MeSiO_{1/2}(NH-C=O-NH)_{1/2}(NH-C=O-NH₂); SiO_{2/2}(NH-C=O-NH)_{1/2}(NH-C=O-NH₂); SiO_{1/2}(NH-C=O-NH)_{2/2}(NH-C=O-NH₂); SiO_{1/2}(NH-C=O-NH)_{1/2}(NH-C=O-NH₂)₂;
15) MeSi[SiMe(NH-C=O-NH)_{1/2}(NH-C=O-NH₂)](NH-C=O-NH)_{1/2} (NH-C=O-NH₂); MeSi[SiMe(NH-C=O-NH)_{2/2}](NH-C=O-NH)_{1/2}(NH-C=O-NH₂); Si[SiMe(NH-C=O-NH)_{1/2}(NH-C=O-NH₂)](NH-C=O-NH)_{1/2}(NH-C=O-NH₂)₂; Si[SiMe(NH-C=O-NH)_{2/2}](NH-C=O-NH)_{1/2}(NH-C=O-NH₂)₂; Si[SiMe(NH-C=O-NH)_{1/2}(NH-C=O-NH₂)](NH-C=O-NH)_{2/2}(NH-C=O-NH₂); Si[SiMe(NH-C=O-NH)_{2/2}](NH-C=O-NH)_{2/2}(NH-C=O-NH₂)
16) MeSi[(CMe₂)ₛ]_{1/2}(NH-C=O-NH)_{1/2}(NH-C=O-NH₂); Si[(CMe₂)ₛ]_{1/2}(NH-C=O-NH)_{2/2}(NH-C=O-NH₂); Si[(CMe₂)ₛ]_{1/2}(NH-C=O-NH)_{1/2}(NH-C=O-NH₂)₂; mit s = 1 bis 20
17) MeSi[SiMe(NH-C=O-NH)_{1/2}(NH-C=O-NH₂)](NH-C=O-NH)_{1/2}O_{1/2}; MeSi[SiMe(NH-C=O-NH)_{2/2}](NH-C=O-NH)_{1/2}O_{1/2}; Si[SiMe(NH-C=O-NH)_{1/2}(NH-C=O-NH₂)](NH-C=O-NH)_{1/2}O_{2/2}; Si[SiMe(NH-C=O-NH)_{2/2}](NH-C=O-NH)_{1/2}O_{2/2}; Si[SiMe(NH-C=O-NH)_{1/2}(NH-C=O-NH₂)](NH-C=O-NH)_{2/2}O_{1/2}; Si[SiMe(NH-C=O-NH)_{2/2}](NH-C=O-NH)_{2/2}O_{1/2}
18) MeSi[(CMe₂)ₛ]_{1/2}(NH-C=O-NH)_{1/2}O_{1/2}; Si[(CMe₂)ₛ]_{1/2}(NH-C=O-NH)_{2/2}O_{1/2}; Si[(CMe₂)ₛ]_{1/2}(NH-C=O-NH)_{1/2}O_{2/2}; mit s = 1 bis 20
19) MeSi[SiMe(NH-C=O-NH)_{1/2}(NH-C=O-NH₂)]O_{1/2}(NH-C=O-NH₂); MeSi[SiMe(NH-C=O-NH)_{2/2}]O_{1/2}(NH-C=O-NH₂); Si[SiMe(NH-C=O-NH)_{1/2}(NH-C=O-NH₂)]O_{1/2}(NH-C=O-NH₂)₂; Si[SiMe(NH-C=O-NH)_{2/2}]O_{1/2}(NH-C=O-NH₂)₂; Si[SiMe(NH-C=O-NH)_{1/2}(NH-C=O-NH₂)]O_{2/2}(NH-C=O-NH₂); Si[SiMe(NH-C=O-NH)_{2/2}]O_{2/2}(NH-C=O-NH₂)
20) MeSi[(CMe₂)ₛ]_{1/2}O_{1/2}(NH-C=O-NH₂); Si[(CMe₂)ₛ]_{1/2}O_{2/2}(NH-C=O-NH₂); Si[(CMe₂)ₛ]_{1/2}O_{1/2}(NH-C=O-NH₂)₂; mit s = 1 bis 20
21) Si[SiMe(NH-C=O-NH)_{1/2}(NH-C=O-NH₂)]O_{1/2} (NH-C=O-NH₂)(NH-C=O-NH)_{1/2}; Si[SiMe(NH-C=O-NH)_{2/2}O_{1/2}(NH-C=O-NH₂)(NH-C=O-NH)_{1/2};
22) Si[(CMe₂)ₛ]_{1/2}O_{1/2}(NH-C=O-NH₂)(NH-C=O-NH)_{1/2}; mit s = 1 bis 20, wobei Me gleich Methylrest bedeutet.

Beispiele für die erfindungsgemäßen Verbindungen aus Einheiten der Formel (I) sind
a) [Me₃Si(NH-C=O-NH)] [SiMe₂O]ₓ[SiMe₂-NH-C=O-NH-]_{y}[SiMe₃] mit x=0-1000; y=0-500; x+y≥1; [Me₃Si(OSiMe₂)₄(NH-C=O-NH)][SiMe₂O]ₓ[SiMe₂-NH-C=O-NH-]_{y} [(SiMe₂O)₄SiMe₃] mit x=0-1000; y=0-500; x+y≥1; [Me₃Si(NMe-C=O-NMe)][SiMe₂O]ₓ[SiMe₂(NMe-C=O-NMe)]_{y}[SiMe₃] mit x=0-1000; y=0-500; x+y≥1; [Me₃Si(OSiMe₂)₄(NMe-C=O-NMe)][SiMe₂O]ₓ[SiMe₂(NMe-C=O-NMe)]_{y} [(SiMe₂O)₄SiMe₃] mit x=0-1000; y=0-500; x+y≥1; (MeSi(NH-C=O-NH)_{2/2}(NH-C=O-NH₂)][MeSi(NH-C=O-NH)_{3/2}]₂; [MeSi(NH-C=O-NH)_{1/2}(NH-C=O-NH₂)₂]₂[MeSi(NH-C=O-NH)_{2/2} (NH-C=O-NH₂)]₃ [MeSi(NH-C=O-NH)_{3/2}]₁₂; [MeSi(NPh-C=O-NPh)_{1/2}(NPh-C=O-NPh₂)₂]₂[MeSi(NPh-C=O-NPh)_{2/2} (NPh-C=O-NPh₂)]₃ [MeSi(NPh-C=O-NPh)_{3/2}]₁₂; [ViSi(NH-C=O-NH)_{1/2}(NH-C=O-NH₂)₂]₂(ViSi(NH-C=O-NH)_{2/2} (NH-C=O-NH₂)]₃ [ViSi(NH-C=O-NH)_{3/2}]₁₂; [MeSi(NH-C=O-NH)_{1/2}(NH-C=O-NH₂)₂]₂[MeSi(NH-C=O-NH)_{2/2} (NH-C=O-NH₂)]₂ [MeSi(NH-C=O-NH)_{3/2}]₂[(NH-C=O-NH)_{1/2}(SiMe₂O)ₓSiMe₂ (NH-C=O-NH)_{1/2}]_{y} mit x=0-20; y=0-50; [ViSi(NH-C=O-NH)_{1/2}(NH-C=O-NH₂)₂]₂[ViSi(NH-C=O-NH)_{2/2} (NH-C=O-NH₂)]₂ [ViSi(NH-C=O-NH)_{3/2}]₂[(NH-C=O-NH)_{1/2}(SiMe₂O)ₓSiMe₂ (NH-C=O-NH)_{1/2}]_{y} mit x = 0 bis 20; y = 0 bis 50;
b) [MeSi(NH-C-O-NH)_{2/2}{SiMe(NH-C=O-NH)_{1/2}(NH-C=O-NH₂)}]₇ [MeSi(NH-C=O-NH)_{1/2}(NH-C=O-NH₂){SiMe(NH-C=O-NH)_{1/2} (NH-C=O-NH₂)}]₄ [MeSi(NH-C=O-NH)_{2/2}{SiMe(NH-C=O-NH₂)₂}]₃ [MeSi(NH-C=O-NH)_{2/2}{SiMe(NH-C=O-NH)_{2/2}}]₂ [MeSi(NH-C=O-NH)_{1/2}{NH-C=O-NH₂){SiMe(NH-C=O-NH₂)₂}]; [MeSi(NH-C=O-NH)_{2/2}{SiMe(NH-C=O-NH)_{1/2}(NH-C=O-NH₂)}]₃ [MeSi(NH-C=O-NH)_{1/2}(NH-C=O-NH₂){SiMe(NH-C=O-NH)_{1/2} (NH-C=O-NH₂)}]₆ [MeSi(NH-C=O-NH)_{2/2}{SiMe(NH-C=O-NH₂)₂}]₄ [MeSi(NH-C=O-NH)_{2/2}{SiMe(NH-C=O-NH)_{2/2}}]₂ [MeSi(NH-C=O-NH)_{1/2}(NH-C=O-NH₂){SiMe(NH-C=O-NH₂)₂}] [SiMe₂(NH-C=O-NH)_{2/2}]₂₀;
c) [MeSi{(CH₂)₂}_{1/2}(NH-C=O-NH)_{1/2}(NH-C=O-NH₂)]₅ [MeSi{(CH₂)₂}_{1/2}(NH-C=O-NH)_{2/2}]₄ [MeSi{(CH₂)₂}_{1/2}(NH-C=O-NH₂)₂] [SiMe₂(NH-C=O-NH)_{2/2}]₁₀, wobei Me gleich Methylrest, Vi gleich Vinylrest und Ph gleich Phenylrest bedeutet.

Vorzugsweise weisen die erfindungsgemäßen Organosiliciumverbindungen 3 bis 1000 Siliciumatome, besonders bevorzugt 3 bis 300 Siliciumatome, auf.

Bevorzugt handelt es sich bei den erfindungsgemäßen Organosiliciumverbindungen aus Einheiten der Formel (I) um solche, in denen r gleich 0 ist.

Besonders bevorzugt handelt es sich bei den erfindungsgemäßen Organosiliciumverbindungen aus Einheiten der Formel (I) um solche, in denen r=m=0 ist.

Die Herstellung der erfindungsgemäßen Verbindungen kann auf verschiedenen Wegen erfolgen.

### Verfahren A

Ein weiterer Gegenstand der Erfindung ist ein Verfahren zur Herstellung der erfindungsgemäßen Organosiliciumverbindungen durch Umsetzung von Harnstoff(derivaten) der Formel 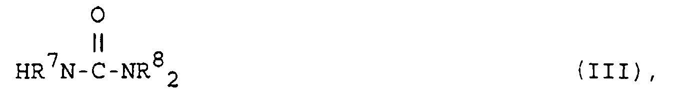 wobei R⁷ und R⁸ gleich oder verschieden sein können und jeweils unabhängig voneinander eine für R¹, R², R³ und R⁴ oben angegebene-Bedeutung haben, mit der Maßgabe, daß mindestens eine Verbindung der Formel (III) mit mindestens einem Rest R⁸ gleich Wasserstoffatom eingesetzt wird,
mit Chlorresten aufweisenden Organosilciumverbindungen aus Einheiten der Formel

RₐSiO_{n/2}Yₘ[(CR⁵ ₂)ₛ]_{r/2}Clᵤ (IV),

wobei R, R⁵, Y, a, n, m, r und s jeweils gleich oder verschieden sein können und eine oben dafür angegebene Bedeutung haben sowie u 0, 1, 2, 3 oder 4 isc, mit der Maßgabe, daß die Summe a+n+m+r+u gleich 4 ist und mindestens eine Verbindung aus Einheiten der Formel (IV) mit mindestens einem Chloratom pro Molekül vorhanden ist,
unter Abspaltung von HCl.

Vorzugsweise wird das dabei gebildete HCl entfernt.

Beispiele für die im erfindungsgemäßen Verfahren A eingesetzten Harnstoff(derivate) sind Harnstoff, N-Methylharnstoff, N,N'-Dimethylharnstoff, N-Vinylharnstoff, N,N'-Divinylharnstoff, N-Phenylharnstoff, N,N'-Diphenylharnstoff, N-Ethylharnstoff, N,N'-Diethylharnstoff, N-(Trifluorpropyl)harnstoff, N,N'-Di(Trifluorpropyl)harnstoff, N-Cyclohexylharnstoff, N,N'-Dicyclohexylharnstoff, N-Benzylharnstoff und N,N'-Dibenzylharnstoff, wobei Harnstoff besonders bevorzugt ist.

Bei den im erfindungsgemäßen Verfahren A eingesetzten Chlorreste aufweisenden Verbindungen kann es sich um monomere, oligomere oder polymere Verbindungen handeln, wobei Art und Menge selbstverständlich so zu wählen sind, daß die entstehenden Organosiliciumverbindungen mindestens 3 Siliciumatome aufweisen.

Beispiele für die im erfindungsgemäßen Verfahren A eingesetzten, Chlorreste aufweisenden Organosilciumverbindungen sind
a) Me₃Si(OSiMe₂)ₑCl; Cl(SiMe₂O)ₑSiMe₂Cl; MeSiCl₃; SiCl₄ mit e gleich 0 bis 1000;
b) ViMe₂Si(OSiMe₂)ₑ(OSiViMe)_{f}Cl; Cl(SiMe₂O)ₑ(SiViMeO)_{f}SiMe₂Cl; ViSiCl₃ mit e gleich 0 bis 1000 und f gleich 0 bis 100;
c) PhMe₂Si(OSiMe₂)ₑ(OSiPhMe)_{f}Cl; Cl(SiMe₂O)ₑ(SiPhMeO)_{f}SiMe₂Cl; PhSiCl₃ mit e gleich 0 bis 1000 und f gleich 0 bis 100; (Trifluorpropyl)Me₂Si(OSiMe₂)ₑ(OSi(Trifluorpropyl)Me)_{f}Cl; Cl(SiMe₂O)ₑ(Si(Trifluorpropyl)MeO)_{f}SiMe₂Cl; (Trifluorpropyl)SiCl₃ mit e gleich 0 bis 1000 und f gleich 0 bis 100; und
d) Cl₃Si-(CH₂)ₛ-SiCl₃; MeCl₂Si-(CH₂)ₛ-SiMeCl₂; ClMe₂Si-(CH₂)ₛ-SiClMe₂ mit s gleich 1 bis 20; Disilane der Formel Me_{6-g}Si₂Cl_{g} mit g gleich 1 bis 6, wobei die unter a), b) und c) genannten Beispiele bevorzugt sowie Me₃Si(OSiMe₂)ₑCl, Cl(SiMe₂O)ₑSiMe₂Cl, MeSiCl₃ und SiCl₄ mit e gleich 0 bis 1000 besonders bevorzugt sind, wobei Me gleich Methylrest, Vi gleich Vinylrest und Ph gleich Phenylrest bedeutet.

Bei dem erfindungsgemäßen Verfahren A wird Harnstoff(derivat) vorzugsweise in Mengen von 0,01 bis 10 Mol, besonders bevorzugt 0,1 bis 2 Mol, jeweils bezogen auf 1 Mol Chlor der erfindungsgemäß eingesetzten Chlorreste aufweisenden Organosiliciumverbindung, eingesetzt.

Sowohl bei den erfindungsgemäß eingesetzten Chlorresten aufweisenden Organosilciumverbindungen wie auch bei den Harnstoff(derivaten) handelt es sich um handelsübliche Produkte bzw. können nach in der Chemie gängigen Methoden hergestellt werden. Hierzu sei beispielsweise auf die in US 5,473,037 und in EP-A 484 959 beschriebenen Herstellungsverfahren verwiesen.

Das erfindungsgemäße Verfahren A wird bei Temperaturen von vorzugsweise -80 bis 200°C, besonders bevorzugt von 0 bis 80°C, und vorzugsweise bei dem Druck der umgebenden Atmosphäre, also zwischen 900 und 1100 hPa, durchgeführt.

Vorzugsweise wird das erfindungsgemäße Verfahren A in inerter Atmosphäre durchgeführt, wobei mit inerter Atmosphäre im Sinne der Erfindung eine Atmosphäre bezeichnet wird, die im wesentlichen sauerstoff- und wasserfreie ist, wie z.B. Stickstoff- oder Argon-Atmosphäre.

Vorzugsweise erfolgt die erfindungsgemäße Umsetzung in Anwesenheit von gegenüber den Reaktionsteilnehmern inerten Lösungsmitteln, wie z.B. Aromaten, Kohlenwasserstoffen, Ethern, chlorierten Kohlenwasserstoffen oder α,ω-Trimethylsilylpolydimethylsiloxanen, wobei die gegebenenfalls eingesetzten Lösungsmittel vorzugsweise weitgehend frei von Wasser sind oder Wasser in Mengen von bis zu 0,2 Gew.-% enthalten.

Falls bei dem erfindungsgemäßen Verfahren A Lösungsmittel eingesetzt wird, handelt es sich bevorzugt um Ether und gegebenenfalls substituierte Kohlenwasserstoffe, wie z.B. Benzol, Toluol, Xylol, Chloroform, Methylenchlorid, Trichlorethan, Trichlorpropan, Hexan, Heptan, Octan, Decan, Dodecan, Petrolether, Diethylether und Tetrahydrofuran.

Falls Lösungsmittel eingesetzt wird, handelt es sich um Mengen von bevorzugt 1 bis 1000 Gewichtsteile, besonders bevorzugt 20 bis 400 Gewichtsteile, jeweils bezogen auf 100 Gewichtsteile Chlorreste aufweisende Organosilicium- verbindung.

Vorzugsweise erfolgt die Entfernung des bei der erfindungsgemäßen Umsetzung entstehenden Chlorwasserstoffs mittels Basen, wie beispielsweise Ammoniak, Methylamin, Dimethylamin, Trimethylamin, Ethylamin, Diethylamin, Triethylamin, Butylamin, Dibutylamin, Tributylamin, Octylamin, Dioctylamin, Trioctylamin, Nonylamin, Dinonylamin und Trinonylamin.

Vorzugsweise wird bei dem erfindungsgemäßen Verfahren A als Base Amine, besonders bevorzugt tertiäre Amine, wie z.B. Triethylamin oder Pyridin, eingesetzt.

Falls bei dem erfindungsgemäßen Verfahren A Base eingesetzt wird, handelt es sich um Mengen von vorzugsweise 0,1 bis 20 Mol, besonders bevorzugt 0,5 bis 5 Mol, jeweils bezogen auf ein Mol Chlor der erfindungsgemäß eingesetzten Chlorreste aufweisenden Organosiliciumverbindung.

Das durch die Abfangreaktion entstandene Salz, bevorzugt ein Ammoniumhydrochlorid, wie z.B. Triethylammoniumchlorid, wird vorzugsweise, z.B. durch Filtration oder Zentrifugation, aus dem Reaktionsgemisch entfernt. Falls erwünscht, wird das Filtrat von dem gegebenenfalls eingesetzten organischen Lösungsmittel, beispielsweise durch Destillation, befreit.

Bei einer bevorzugten Ausführungsform des erfindungsgemäßen Verfahrens A werden die Chlorreste aufweisenden Organosiliciumverbindungen zu einem Gemisch aus Harnstoff (derivaten), gegebenenfalls Base sowie gegebenenfalls organischem Lösungsmittel gegeben und reagieren gelassen.

Bei einer besonders bevorzugten Ausführungsform des erfindungsgemäßen Verfahrens A werden die Chlorreste aufweisenden Organosiliciumverbindungen zu einem Gemisch aus Harnstoff(derivaten), Base sowie organischem Lösungsmittel gegeben und reagieren gelassen, wobei nach Beendigung der Umsetzung das entstandene Salz abfiltriert und das organische Lösungsmittel abgetrennt wird.

Bei den im erfindungsgemäßen Verfahren A eingesetzten Komponenten kann es sich jeweils um eine einzelne Art einer solchen Komponente wie auch um mindestens zwei verschiedene Arten derartiger Komponenten handeln. Bei der erfindungsgemäß eingesetzten Chlorreste aufweisenden Organosiliciumverbindung handelt es sich bevorzugt um ein Gemisch aus verschiedenen Arten.

### Verfahren B

Ein weiterer Gegenstand der Erfindung ist ein Verfahren zur Herstellung der erfindungsgemäßen Organosilciumverbindungen, dadurch gekennzeichnet,daß
in einem 1. Schritt
Chlorreste aufweisende Organosiliciumverbindungen aus Einheiten der Formel (IV), mit der Maßgabe, daß die Summe a+n+m+r+u gleich 4 ist und mindestens eine Verbindung aus Einheiten der Formel (IV) mit mindestens einem Chloratom pro Molekül vorhanden ist, mit Aminoverbindungen der Formel

R⁹ ₂NH (V)

umgesetzt werden, wobei R⁹ gleich oder verschieden sein kann und eine für Rest R angegebene Bedeutung hat, und
in einem 2. Schritt
die im 1. Schritt erhaltenen Organosiliciumverbindungen mit Harnstoff(derivaten) der Formel (III), mit der Maßgabe, daß mindestens eine Verbindung der Formel (III) mit mindestens einem Rest R⁸ gleich Wasserstoffatom eingesetzt wird, gegebenenfalls in Anwesenheit von Katalysator umgesetzt werden.

Bevorzugt handelt es sich bei Rest R⁹ um Wasserstoffatom und Alkylreste mit 1 bis 20 Kohlenstoffatomen, wobei Wasserstoffatom und Alkylreste mit 1 bis 4 Kohlenstoffatomen besonders bevorzugt sind.

Beispiele für Aminoverbindungen der Formel (V) sind Ammoniak, Methylamin, Dimethylamin, Ethylamin, Diethylamin, Propylamin, Dipropylamin, Butylamin, Dibutylamin, Pentylamin, Dipentylamin, Octylamin, Nonylamin, Decylamin, Cocosfettamin, Oleylamin, Stearylamin, Talgfettamin, Cyclohexylamin, Benzylamin, Phenylethylamin, Ethylendiamin, Diaminobutan, Diaminohexan, Anilin, Methylanilin, Diphenylanilin, Toluidin, Chloranil, Nitranilin und Phenylendiamin, wobei Ammoniak, Methylamin, Dimethylamin, Ethylamin, Diethylamin, Propylamin, Dipropylamin, Butylamin und Dibutylamin bevorzugt und Ammoniak sowie Methylamin besonders bevorzugt sind.

Bei den Chlorreste aufweisenden Organosiliciumverbindungen aus Einheiten der Formel (IV) kann es sich um die gleichen handeln, wie bei Verfahren A beschrieben, wobei Art und Menge selbstverständlich so zu wählen sind, daß die entstehenden Organosiliciumverbindungen mindestens 3 Siliciumatome aufweisen.

Im 1. Schritt des erfindungsgemäßen Verfahrens B wird Aminoverbindung der Formel (V) in Mengen von vorzugsweise 0,5 bis 10 Mol, besonders bevorzugt 0,8 bis 5 Mol, jeweils bezogen auf ein Mol Chlor der erfindungsgemäß eingesetzten Chlorreste aufweisenden Organosiliciumverbindung, eingesetzt.

Die Umsetzung gemäß dem 1. Schritt des erfindungsgemäßen Verfahrens B kann des weiteren in bereits bekannter Weise erfolgen. So wird die Umsetzung von Chlorsiloxanen mit Ammoniak bzw. Aminen beispielsweise in DE-A 29 53 680 sowie in der darin zitierten Literatur beschrieben.

Bei den Harnstoff(derivaten) der Formel (III) kann es sich um die gleichen handeln, wie bei Verfahren A beschrieben.

Im 2. Schritt des erfindungsgemäßen Verfahrens B können alle diejenigen Katalysatoren eingesetzt werden, die als Katalysator für die Umsetzung von Hexamethyldisilazan mit Harnstoff zu N,N'-Bis(trimethylsilyl)harnstoff bisher verwendet werden. Beispiele für diese Katalysatoren sind zu finden in DE-A 25 07 882, DE-A 25 53 932, DE-A 27 57 936, Bruynes et al. in J. org. Chem. 1982, **47**, 3966-9 und Ullmann's Encyclopedia of Industrial Chemistry, 1993, Vol. A 24, Seite 34f.

Falls im 2. Schritt des erfindungsgemäßen Verfahrens B Katalysator eingesetzt wird, handelt es sich bevorzugt um solche, wie sie in DE-A 25 07 882 verwendet werden, wobei (NH₄)₂SO₄ besonders bevorzugt ist.

Falls im 2. Schritt des erfindungsgemäßen Verfahrens B Katalysator eingesetzt wird, handelt es sich um Mengen von vorzugsweise 0,001 bis 1 Gewichtsteile, bezogen auf 100 Gewichtsteile erfindungsgemäß eingesetzte Chlorreste aufweisende Organosiliciumverbindung.

Der 1. Schritt des erfindungsgemäßen Verfahrens B erfolgt bei Temperaturen von vorzugsweise -20 bis 200°C, besonders bevorzugt von 0 bis 150°C, insbesondere von 0 bis 100°C.

Der 2. Schritt des erfindungsgemäßen Verfahrens B erfolgt bei Temperaturen von vorzugsweise 0 bis 200°C, besonders bevorzugt von 20 bis 180°C, insbesondere von 40 bis 160°C.

Der 1. Schritt des erfindungsgemäßen Verfahrens B erfolgt vorzugsweise beim Druck der umgebenden Atmosphäre, also zwischen 900 und 1100 hPa.

Der 2. Schritt des erfindungsgemäßen Verfahrens B erfolgt vorzugsweise bei Drücken zwischen 1 hPa und Normaldruck, also zwischen 900 und 1100 hPa.

Der 2. Schritt der erfindungsgemäßen Umsetzung kann in Anwesenheit von gegenüber den Reaktionsteilnehmern inerten Lösungsmitteln durchgeführt werden, was jedoch nicht bevorzugt ist. Beispiele dafür sind alle im Zusammenhang mit Verfahren A genannten Lösungsmittel.

In einer bevorzugten Ausführungsform des erfindungsgemäßen Verfahrens B wird in einem ersten Schritt zu einem Gemisch aus Chlorreste aufweisenden Organosiliciumverbindungen und organischem Lösungsmittel Amin gegeben und reagieren gelassen, wobei nach Beendigung der Umsetzung das entstandene Salz abgetrennt wird, sowie in einem 2. Schritt zu der im 1. Schritt erhaltenen Organosiliciumverbindung Harnstoff(derivate) gegebenenfalls im Gemisch mit Katalysator gegeben und reagieren gelassen wird.

Bei den im erfindungsgemäßen Verfahren B eingesetzten Komponenten kann es sich jeweils um eine einzelne Art einer solchen Komponente wie auch um mindestens zwei verschiedene Arten derartiger Komponenten handeln. Bei der erfindungsgemäß eingesetzten Chlorreste aufweisenden Organosiliciumverbindung handelt es sich bevorzugt um ein Gemisch aus verschiedenen Arten.

### Verfahren C

Gegenstand der Erfindung ist ein Verfahren zur Herstellung der erfindungsgemäßen Organosiliciumverbindungen durch Umsetzung von silylierten Harnstoff(derivaten) der Formel 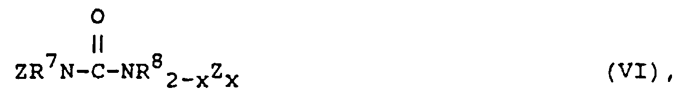 wobei R⁷ und R⁸ eine der oben dafür angegebenen Bedeutungen haben, Z ein Silylrest bedeutet und x 0 oder 1 ist, mit der Maßgabe, daß die Verbindung der Formel (VI) maximal 2 Siliciumatome aufweist und mindestens eine Verbindung der Formel (VI) mit x=1 eingesetzt wird, mit Chlorresten aufweisenden Organosilciumverbindungen aus Einheiten der Formel (IV), mit der Maßgabe, daß die Summe a+n+m+r+u gleich 4 ist und mindestens eine Verbindung aus Einheiten der Formel (IV) mit mindestens einem Chloratom pro Molekül vorhanden ist.

Beispiele für Reste Z sind Me₃Si-, Et₃Si-, ViMe₂Si-, PhMe₂Si-, (H₄F₃C₃)Me₂Si-, (H₄F₃C₃)₃Si- und Me₃SiOMe₂Si-, wobei Me gleich Methylrest, Vi gleich Vinylrest, Et gleich Ethylrest und Ph gleich Phenylrest bedeutet.

Beipiele für im erfindungsgemäßen Verfahren C eingesetzte silylierte Harnstoff(derivate) sind N,N'-Bis(trimethylsilyl)-harnstoff, N,N'-Bis(trimethylsilyl)-N,N'-dimethylharnstoff und N,N'-Bis(trimethylsilyl)-N,N'-diphenylharnstoff, wobei N,N'-Bis(trimethylsilyl)harnstoff besonders bevorzugt ist.

Die im erfindungsgemäßen Verfahren C eingesetzten silylierten Harnstoff(derivate) sind handelsübliche Verbindungen oder können nach in der Siliciumchemie gängigen Verfahren hergestellt werden.

Beispiele für die im erfindungsgemäßen Verfahren C eingesetzten Chlorreste aufweisenden Organosiliciumverbindungen aus Einheiten der Formel (IV) sind die im Zusammenhang mit Verfahren A genannten, wobei Art und Menge selbstverständlich so zu wählen sind, daß die entstehenden Organosiliciumerbindungen mindestens 3 Siliciumatome aufweisen.

Im erfindungsgemäßen Verfahren C wird silylierte Verbindung der Formel (VI) in solchen Mengen eingesetzt, daß vorzugsweise 0,1 bis 10 Mol, besonders bevorzugt 0,2 bis 5 Mol, Silylgruppen, jeweils bezogen auf 1 Mol Chlor der erfindungsgemäß eingesetzten Chlorreste aufweisenden Organosiliciumverbindung, vorliegen.

Die erfindungsgemäße Umsetzung erfolgt bei Temperaturen von vorzugsweise 0 bis 200°C, besonders bevorzugt von 20 bis 180°C, insbesondere von 30 bis 160°C.

Das erfindungsgemäße Verfahren C erfolgt vorzugsweise zwischen einem Druck von 1 mbar und dem Druck der umgebenden Atmosphäre, also zwischen 900 und 1100 hPa, in Abhängigkeit von der Reaktionstemperatur und den verwendeten Chlorreste aufweisenden Organosiliciumverbindungen bzw. den eingesetzten silylierten Harnstoffen bzw. Harnstoffderivaten.

Bei den im erfindungsgemäßen verfahren C eingesetzten Komponenten kann es sich jeweils um eine einzelne Art einer solchen Komponente wie auch um mindestens zwei verschiedene Arten derartiger Komponenten handeln. Bei der erfindungsgemäß eingesetzten Chlorreste aufweisenden Organosiliciumverbindung handelt es sich bevorzugt um ein Gemisch aus verschiedenen Arten.

Das erfindungsgemäße Verfahren A hat den Vorteil, daß es einfach in der Durchführung ist und die Herstellung der erfindungsgemäßen Organosiliciumverbindungen direkt und ohne Isolierung von Zwischenstufen erfolgt und somit zeit- und kostengünstig ist.

Das erfindungsgemäße Verfahren B hat den Vorteil, daß auf diesem Weg absolut chlorfreie Endprodukte erhalten werden.

Das erfindungsgemäße Verfahren C hat den Vorteil, daß es einfach in der Durchführung ist und keine aufwendige Abtrennung von Ammoniumsalzen vom erfindungsgemäßen Produkt erfolgt.

Die erfindungsgemäßen Organosiliciumverbindungen haben den Vorteil, daß sie protische Verbindungen, wie etwa Wasser, Alkohole oder Silanole, dauerhaft und quantitativ durch chemische Reaktion entfernen können, was in der Regel zu nichtflüchtigen sowie toxisch und ökologisch unbedenklichen Reaktionsprodukten, wie etwa Harnstoff bzw. Harnstoffderivate sowie Sil(ox)ane, führt.

Die erfindungsgemäßen bzw. erfindungsgemäß hergestellten Organosiliciumverbindungen können für verschiedenste Anwendungen eingesetzt werden, bei denen die Aufgabe darin besteht, protische Verbindungen oder Gruppen zu entfernen. Besonders geeignet sind die erfindungsgemäßen Verbindungen für die Entfernung von Substanzen mit OH-Gruppen.

Beispiele für Verbindungen oder Gruppen die mit den erfindungsgemäßen bzw. erfindungsgemäß hergestellten Organosiliciumverbindungen entfernt werden können, sind Wasser, Alkohole, organische Säuren, wie z.B. Carbon- und Sulfonsäuren, Silanolgruppen enthaltende Verbindungen sowie anorganische Säuren mit OH-Gruppen, wie z.B. Schwefel-, Sulfon- oder Salpetersäuren.

Die Menge der zur Verwendung kommenden erfindungsgemäßen Verbindungen ist dabei abhängig von der Menge der umzusetzenden protischen Verbindungen oder Gruppen. Für eine vollständige Umsetzung ist pro zu entfernender protischer Gruppe in den erfindungsgemäßen Verbindungen bevorzugt mindestens eine chemische Bindung zwischen Siliciumatom und Harnstoff-Einheit notwendig.

Ganz besonders geeignet sind die erfindungsgemäßen Verbindungen als Zusatz zu Organopolysiloxanmassen, wie z.B. RTV-1-Alkoxysiliconmassen, zur Erhöhung der Lagerstabilität.

Ein weiterer Gegenstand der vorliegenden Erfindung sind unter Ausschluß von Feuchtigkeit lagerfähige und bei Zutritt von Feuchtigkeit bei Raumtemperatur unter Abspaltung von Alkoholen zu Elastomeren vernetzbare Organopolysiloxanmassen auf der Basis von
(A) Polydiorganosiloxanen mit mindestens zwei Organyloxyresten an einer jeden Endgruppe,
   gegebenenfalls
(B) organyloxyfunktionellen Vernetzern mit mindestens drei Organyloxygruppen
   und gegebenenfalls
(C) Kondensationskatalysatoren,
   dadurch gekennzeichnet, daß sie mindestens eine
(D) erfindungsgemäße Organosiliciumverbindung mit mindestens drei Siliciumatomen aus Einheiten der Formel (I) enthalten.

Die erfindungsgemäßen Massen können je nach Anwendung standfest oder fließfähig sein.

Bei den erfindungsgemäß eingesetzten Polydiorganosiloxanen mit mindestens zwei Organyloxyresten an einer jeden Endgruppe handelt es sich vorzugsweise um solche der allgemeinen Formel

(R¹²O)_{3-b}R¹¹ _{b}SiO-[R¹⁰ ₂SiO]_{c}-SiR¹¹ _{b}(OR¹²)_{3-b} (VII),

wobei
b 0 oder 1 ist,
R¹⁰ gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykol-resten substituiert sind, wobei letztere aus Oxyethylen- und/oder Oxypropyleneinheiten aufgebaut sind, bedeutet und R¹¹ gleich oder verschieden sein kann und eine für R angegebene Bedeutung hat,
R¹² gleich oder verschieden sein kann und einen gegebenenfalls mit Amino-, Ester-, Ether-, Keto- oder Halogengruppen substituierten Kohlenwasserstoffrest mit 1 bis 18 Kohlenstoffatomen, der mit Sauerstoffatomen unterbrochen sein kann, bedeutet und c eine ganze Zahl von 10 bis 10 000, bevorzugt 100 bis 3 000, besonders bevorzugt 400 bis 2 000, ist.

Beispiele für Reste R¹⁰ und R¹¹ sind die für Rest R oben angegebenen Beispiele.

Bevorzugt als Rest R¹⁰ sind die oben für Rest R als bevorzugt angegebenen Reste.

Bevorzugt handelt es sich bei Rest R¹¹ um Wasserstoffatom, unsubstituierte Kohlenwasserstoffreste mit 1 bis 10 Kohlenstoffatomen sowie um mit Amino-, Mercapto-, Morpholino-, Gly-cidoxy-, Acryloxy- oder Methacryloxygruppen substituierte Kohlenwasserstoffreste mit 1 bis 10 Kohlenstoffatomen.

Besonders bevorzugt handelt es sich bei Rest R¹¹ um Alkylreste und Alkenylreste mit 1 bis 4 Kohlenstoffatomen, insbesondere um den Methyl-, Ethyl- und den Vinylrest, sowie um über Alkylenreste mit 2 bis 6 Kohlenstoffatomen mit dem Siliciumatom verbundene, gegebenenfalls substituierte Amino- und Glycidoxygruppen.

Bevorzugt handelt es sich bei Rest R¹² um Alkylreste mit 1 bis 8 Kohlenstoffatomen, die mit Methoxy- oder Ethoxygruppen substituiert sein können, wobei Methyl- oder Ethylreste besonders bevorzugt sind.

Beispiele für Alkylreste R¹² sind die oben für R angegebenen Beispiele für Alkylreste.

Der durchschnittliche Wert für die Zahl c in Formel (VII) ist vorzugsweise so gewählt, daß das Organopolysiloxan der Formel (VII) eine Viskosität von 1 000 bis 1 000 000 mm²/s, besonders bevorzugt von 5 000 bis 500 000 mm²/s, jeweils gemessen bei einer Temperatur von 25°C, besitzt.

Obwohl in Formel (VII) nicht angegeben bzw. aus der Bezeichnung Polydiorganosiloxan nicht entnehmbar, können bis zu 10 Molprozent der Diorganosiloxaneinheiten durch andere, meist jedoch nur als mehr oder weniger schwer vermeidbare Verunreinigungen vorliegende Siloxaneinheiten, wie R¹⁰₃SiO_{1/2}-, R¹⁰SiO_{3/2}- und SiO_{4/2}-Einheiten, ersetzt sein, wobei R¹⁰ die vorstehend dafür angegebene Bedeutung hat.

Beispiele für die in den erfindungsgemäßen Massen eingesetzten Polydiorganosiloxane mit mindestens zwei Organyloxyresten an einer jeden Endgruppe (A) sind (MeO)₂MeSiO[SiMe₂O]₂₀₀₋₂₀₀₀SiMe(OMe)₂, (EtO)₂MeSiO[SiMe₂O]₂₀₀₋₂₀₀₀SiMe(OEt)₂, (MeO)₂ViSiO[SiMe₂O]₂₀₀₋₂₀₀₀SiVi(OMe)₂, (EtO)₂ViSiO[SiMe₂O]₂₀₀₋₂₀₀₀SiVi(OEt)₂, (MeO)₂CapSiO[SiMe₂O]₂₀₀₋₂₀₀₀SiCap(OMe)₂, (MeO)₂BapSiO[SiMe₂O]₂₀₀₋₂₀₀₀SiBap(OMe)₂ und (EtO)₂BapSiO[SiMe₂O]₂₀₀₋₂₀₀₀SiBap(OEt)₂,
wobei Me Methylrest, Et Ethylrest, Vi Vinylrest, Cap 3-(Cyclohexylamino)propylrest und Bap 3-(n-Butylamino)propylrest bedeutet.

Die in den erfindungsgemäßen Massen eingesetzten Polydiorganosiloxane mit mindestens zwei Organyloxyresten an einer jeden Endgruppe sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den gegebenenfalls eingesetzten organyloxyfunktionellen Vernetzern (B) kann es sich um beliebige, bisher bekannte Organyloxyvernetzer handeln, wie beispielsweise Silane oder Siloxane mit mindestens drei Organyloxygruppen sowie cyclische Silane gemäß DE-A 36 24 206 (Wacker-Chemie GmbH; ausgegeben am 11. Februar 1988) bzw. der entsprechenden US-A 4,801,673 der Formel 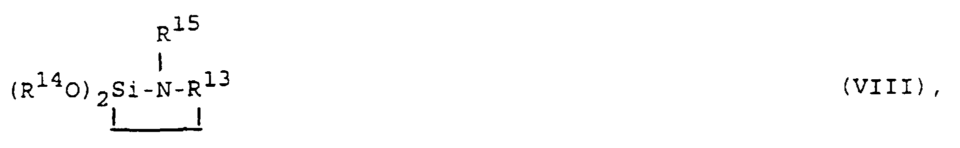 worin
R¹³ einen zweiwertigen Kohlenwasserstoffrest bedeutet,
R¹⁴ gleich oder verschieden sein kann und ein für R¹² angegebene Bedeutung hat und
R¹⁵ Wasserstoffatom, einen Alkyl- oder einen Aminoalkylrest bedeutet.

Bei den in den erfindungsgemäßen Massen gegebenenfalls eingesetzten Organyloxyvernetzern (B) handelt es sich vorzugsweise um Organosilciumverbindungen der Formel

(R¹²O)_{4-d}SiR¹⁶ _{d} (IX),

wobei
R¹² gleich oder verschieden sein kann und eine der ober. angegebenen Bedeutungen hat,
R¹⁶ eine oben für R¹¹ genannte Bedeutung besitzt oder einen mit dem Rest -SiR¹¹ₑ(OR¹²)₃₋ₑ substituierten Kohlenwasserstoffrest darstellt mit R¹¹ und R¹² gleich der obengenannten Bedeutung und e gleich 0, 1, 2 oder 3 und
d 0 oder 1 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (IX), wie auch um Teilcohydrolysate, d.h. Teilhydrolysate von mindestens zwei verschiedenen Arten von Organosiliciumverbindungen der Formel (IX).

Handelt es sich bei den in den erfindungsgemäßen Massen gegebenenfalls eingesetzten Vernetzern (B) um Teilhydrolysate von Organosiliciumverbindungen der Formel (IX), so sind solche mit bis zu 6 Siliciumatomen bevorzugt.

Beispiele für Rest R¹⁶ sind die oben für Rest R¹¹ genannten Beispiele sowie mit Resten -SiR¹¹ₑ(OR¹²)₃₋ₑ substituierte Kohlenwasserstoffreste mit 1 bis 6 Kohlenstofftomen, wobei e gleich 0 oder 1 ist und R¹² die obengenannte Bedeutung hat.

Bevorzugte Reste R¹⁶ sind die für R¹¹ bevorzugt genannten Reste sowie mit Resten -SiR¹¹ₑ(OR¹²)₃₋ₑ substituierte Kohlenwasserstoffreste mit 1 bis 6 Kohlenstoffatomen, wobei e gleich 0 oder 1 ist und R¹² die obengenannte Bedeutung hat.

Besonders bevorzugte Reste R¹⁶ sind die für R¹¹ besonders bevorzugt genannten Reste sowie mit Resten -Si(OR¹²)₃ substitulerte Kohlenwasserstoffreste mit 2 Kohlenstoffatomen, wobei R¹² = Ethyl- oder Methylrest bedeutet.

Besonders bevorzugt handelt es sich bei den in den erfindungsgemäßen Massen gegebenenfalls eingesetzten Vernetzern (B) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Aminopropyltrimethoxysilan, 3-Aminopropyltriethoxysilan, 3-Cyanopropyltrimethoxysilan, 3-Cyanopropyltriethoxysilan, 3-(2-Aminoethylamino)propyltrimethoxysilan, 3-(2-Aminoethylamino)propyltriethoxysilan, 3-(N,N-Diethyl-2-aminoethylamino)propyltrimethoxysilan, 3-(N,N-Diethyl-2-aminoethylamino)propyltriethoxysilan, 3-(Cyclohexylamino)propyltrimethoxysilan, 3-(Cyclohexylamino)propyltriethoxysilan, 3-(Glycidoxy)propyltriethoxysilan, 1,2-Bis(trimethoxysilyl)ethan, 1,2-Bis(triethoxysilyl)ethan sowie Teilhydrolysate der genannten alkoxyfunktionellen Organosiliciumverbindungen, wie z.B. Hexaethoxydisiloxan.

Die in den erfindungsgemäßen Massen eingesetzten Vernetzer (B) sind handelsübliche Produkte bzw. können nach in der Siliciumchemie bekannten Verfahren hergestellt werden.

Die erfindungsgemäßen Massen enthalten Vernetzer (B) in Mengen von vorzugsweise 0 bis 50 Gewichtsteilen, besonders bevorzugt 0,1 bis 20 Gewichtsteilen, insbesondere 0,5 bis 10 Gewichtsteilen, jeweils bezogen auf 100 Gewichtsteile Organopolysiloxan (A).

Es können die erfindungsgemäßen Massen beliebige Kondensationskatalysatoren (C) enthalten, die auch bisher in unter Ausschluß von Wasser lagerfähigen, bei Zutritt von Wasser bei Raumtemperatur zu Elastomeren vernetzenden Massen vorliegen konnten. Dazu gehören alle in der eingangs genannten DE-A 38 01 389 erwähnten Kondensationskatalysatoren, wie etwa Butyltitanate und organische Zinnverbindungen, wie Di-n-butyl-zinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

=SiOSn=

bzw. durch SnC-gebundene, einwertige organische Reste abgesättigt sind.

Bevorzugte Kondensationskatalysatoren (C) sind metallorganische Kondensationskatalysatoren, insbesondere Derivate des Titans, Aluminiums, Zinns sowie Calciums und Zinks, wobei Dialkylzinnverbindungen sowie Zinkdicarboxylate besonders bevorzugt sind.

Beispiele für bevorzugte metallorganische Kondensationskatalysatoren sind die in US-A 4,517,337 (General Electric Co.; ausgegeben am 14. Mai 1985) beschriebenen Dialkyldi(β-diketo)stannate, Dialkylzinndicarboxylate, Calcium- und Zinkdicarboxylate sowie Butyltitanchelatverbindungen.

Beispiele für besonders bevorzugte metallorganische Kondensationskatalysatoren sind Dibutylzinndiacetat, Dibutylzinndilaurat, Dibutylzinndi (2-ethylhexanoat) und Zinkdi(2-ethylhexanoat).

Die erfindungsgemäßen Massen enthalten Kondensationskatalysator (C) in Mengen von vorzugsweise 0 bis 10 Gewichtsteilen, besonders bevorzugt 0,01 bis 5 Gewichtsteilen, insbesondere 0,1 bis 4 Gewichtsteilen, jeweils bezogen auf 100 Gewichtsteile Organopolysiloxan (A).

Beispiele für die in den erfindungsgemäßen Massen eingesetzten Komponente (D) sind die oben für die erfindungsgemäßen Organosiliciumverbindungen aus Einheiten der Formel (I).

Vorzugsweise handelt es sich bei der erfindungsgemäß eingesetzten Komponente (D) um solche aus Einheiten der Formel (I) mit r gleich 0, wobei erfindungsgemäße Organosiliciumverbindungen aus Einheiten der Formel (I) mit r=m=0 besonders bevorzugt eingesetzt werden.

Die erfindungsgemäßen Massen enthalten Verbindung (D) in Mengen von vorzugsweise 0,1 bis 30 Gewichtsteilen, besonders bevorzugt 0,5 bis 20 Gewichtsteilen, insbesondere 0,5 bis 10 Gewichtsteilen, jeweils bezogen auf 100 Gewichtsteile Organopolysiloxan (A).

Zusätzlich zu den oben beschriebenen Komponenten (A), (B), (C) und (D) können die erfindungsgemäßen Massen nun weitere Stoffe, wie Weichmacher (E), Füllstoffe (F), Haftvermittler (G) und Additive (H) enthalten, wobei die zusätzlichen Stoffe (E) bis (H) die gleichen sein können, die auch bisher in unter Abspaltung von Alkoholen vernetzbaren Massen eingesetzt worden sind.

Beispiele für Weichmacher (E) sind bei Raumtemperatur flüssige, durch Trimethylsiloxygruppen endblockierte Dimethylpolysiloxane sowie hochsiedende Kohlenwasserstoffe, wie zum Beispiel Paraffinöle.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas-undKunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Organopolysiloxanmassen eingesetzten Haftvermittler (G) sind Silane und Organopolysiloxane mit funktionellen Gruppen, wie beispielsweise solche mit Aminoalkyl-, Glycidoxypropyl- oder Methacryloxypropylresten sowie Tetraalkoxysilane. Falls jedoch bereits eine andere Komponente, wie etwa Siloxan (A) oder vernetzer (B), die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (H) sind Pigmente, Farbstoffe, Riechstoffe, Fungicide, Oxydationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester gemäß DE-A 26 53 499.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Bevorzugt handelt es sich bei den erfindungsgemäßen Massen um solche, die
(A) Polydiorganosiloxan der Formel (VII),
(B) Vernetzer,
(C) Kondensationskatalysator,
(D) eine oder mehrere der erfindungsgemäßen Organosiliciumverbindungen mit mindestens 3 Siliciumatomen aus Einheiten der Formel (I) sowie
   gegebenenfalls weitere Stoffe
   enthalten.

Besonders bevorzugte handelt es sich bei den erfindungsgemäßen Massen um solche, die aus
(A) 100 Gewichtsteilen Polydiorganosiloxan der Formel (VII),
(B) 0,1 bis 50 Gewichtsteilen Vernetzer der Formel (IX),
(C) 0,01 bis 10 Gewichtsteilen metallorganischen Kondensationskatalysator,
(D) 0,1 bis 30 Gewichtsteilen der erfindungsgemäßen Organosiliciumverbindungen mit mindestens 3 Siliciumatomen aus Einheiten der Formel (I),
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
   bestehen.

Bei den einzelnen Komponenten der erfindungsgemäßen Massen kann es sich jeweils um eine Art einer solchen Komponente wie auch um ein Gemisch aus mindestens zwei verschiedenen Arten derartiger Komponenten handeln.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa erfolgen. Falls erwünscht, kann dieses Vermischen aber auch bei höheren Temperaturen erfolgen, z.B. bei Temperaturen im Bereich von 35°C bis 135°C.

Die Herstellung der erfindungsgemäßen Organopolysiloxanmassen und deren Lagerung muß unter im wesentlichen wasserfreien Bedingungen erfolgen, da ansonsten die Massen vorzeitig aushärten können.

Für die Vernetzung der erfindungsgemäßen Massen zu Elastomeren reicht der übliche Wassergehalt der Luft aus. Die Vernetzung kann, falls erwünscht, auch bei höheren oder niedrigeren Temperaturen als Raumtemperatur, z.B. bei -5° bis 10°C oder bei 30° bis 50°C durchgeführt werden.

Ein weiterer Gegenstand der vorliegenden Erfindung sind Formkörper, hergestellt durch Vernetzung der erfindungsgemäßen Massen.

Die erfindungsgemäßen unter Abspaltung von Alkoholen zu Elastomeren vernetzbaren Organopolysiloxanmassen haben den Vorteil, daß sie sich durch eine sehr hohe Lagerstabilität und eine hohe Vernetzungsgeschwindigkeit auszeichnen. So zeigen die erfindungsgemäßen Massen bei einer Lagerung von mindestens 18 Monaten bei Raumtemperatur zu jedem Zeitpunkt ein konstantes Vulkanisationsverhalten.

Des weiteren haben die erfindungsgemäßen Massen den Vorteil, daß die erfindungsgemäßen Organosiliciumverbindungen mit mindestens 3 Siliciumatomen aus Einheiten der Formel (I) mit OH-Gruppen, insbesondere mit Alkohol und/oder Wasser und/oder Si-OH-Gruppen, bereits bei Raumtemperatur reagieren. Verbindungen mit OH-Gruppen sind dabei in RTV-Alkoxymassen hauptsächlich Wasser, das mit den Rezepturbestandteilen wie etwa dem Polysiloxan oder den Füllstoffen in die Masse eingeschleppt wird, Alkohole, die sich bei der Endblockierung der OH-Polymere sowie der Umsetzung von Si-OH-Gruppen oder Wasser mit Vernetzer bilden, sowie Si-OH-Gruppen an Polysiloxanen und vor allem an der als Füllstoff gegebenenfalls eingesetzten Kieselsäure.

Dabei werden vorteilhafterweise keine ökologisch bedenklichen oder geruchsbelästigenden, flüchtigen Spaltprodukte freigesetzt.

Die erfindungsgemäßen bzw. erfindungsgemäß hergestellten Massen können für alle Verwendungszwecke eingesetzt werden, für die unter Ausschluß von Wasser lagerfähige, bei Zutritt von Wasser bei Raumtemperatur zu Elastomeren vernetzende Organopolysiloxanmassen eingesetzt werden können.

Die erfindungsgemäßen bzw. erfindungsgemäß hergestellten Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß-oder Meerwasser ausgesetzte Oberflächen, oder das Gleiten verhindernden Überzügen, oder vor. gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C.

Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

In den folgenden Beispielen wird Shore-A-Härte nach DIN 53 505-87/Normstab S1 (Deutsche Industrie Norm) bestimmt. Des weiteren werden in den Beispielen die folgenden Abkürzungen verwendet: Me gleich Methylrest

### Beispiel 1

Zu einer Suspension aus 10,15 g Harnstoff (0,17 mol), 17,12 g Triethylamin (0,17 mol) und 67 g Tetrahydrofuran wird innerhalb von 90 Minuten eine Mischung aus 8,8 g Trimethylchlorsilan (0,08 mol) und 20,3 g Dichlortetramethyldisiloxan (0,1 mol) so zugetropft, daß die Temperatur der Reaktionsmischung unter 30°C bleibt. Nach zehnminütiger Erwärmung auf 50°C wird der entstandene Niederschlag abfiltriert. Man wäscht den Niederschlag mit 300 ml Tetrahydrofuran nach, vereinigt die Filtrate und zieht anschließend das Lösungsmittel ab.
Der erhaltene Ruckstand ist bei 90°C zähflussig, bei Raumtemperatur ist er fest. Anhand des ¹H- und ²⁹Si-NMR-Spektrums ergibt sich die mittlere Zusammensetzung des Produktes als [Me₃Si(NH-C=O-NH)_{1/2}]₂[Me₂SiO_{1/2}(NH-C=O-NH)_{1/2}]₁₆[Me₂SiO_{2/2}]₉.

### Beispiel 2

In eine Mischung von 400 ml wasserfreiem Toluol und 330 g (ca. 1 mol) einer Chlorreste aufweisenden Organosiliciumverbindung der mittleren Formel Me₃Si(OMe₂Si)₃Cl wird solange gasförmiger Ammoniak eingeleitet, bis die Reaktionsmischung basisch reagiert. Danach filtriert man das bei der Reaktion als Nebenprodukt anfallende Ammoniumchlorid ab und wäscht den Rückstand mit zweimal 50 ml wasserfreiem Toluol nach. Von den vereinigten toluolischen Losungen destilliert man das Toluol ab. Zurück bleiben 200 g einer klaren Flüssigkeit, die laut ²⁹Si-NMR eine Mischung von Siloxanylaminen darstellt und einer mittleren Formel von [Me₃Si(OMe₂Si)₃]₂NH entspricht.
Eine Mischung aus 170 g des oben hergestellten Siloxanylamins der durchschnittlichen Formel [Me₃Si(OMe₂Si)₃]₂NH, 0,3 g Ammoniumsulfat und 15 g Harnstoff wird so lange auf 140°C erhitzt, bis die zu beobachtende Ammoniakentwicklung zu Ende geht. Anschließend zieht man überschüssiges Siloxanylamin ab. Der erhaltene Rückstand ist bei Raumtemperatur flüssig mit einer Viskosität von ca. 9000 mm²/s.
Anhand des ¹H- und ²⁹Si-NMR-Spektrums ergibt sich die mittlere Zusammensetzung des Produktes als
[Me₃SiO_{1/2}]₅[Me₂SiO_{1/2}(NH-C=O-NH)_{1/2}]₂[Me₂SiO_{2/2}]₄.

### Beispiel 3

51 g N,N'-Bis(trimethylsilyl)harnstoff und 130 g einer Mischung aus 3% Dichlordecamethylpentasiloxan, 64% Dichlordodecamethylhexasiloxan, 31% Dichlortetradecamethylheptasiloxan und 2% Dichlorhexadecamethyloctasiloxan werden bei einer Temperatur von 80°C etwa 1 Stunde lang gerührt, wobei der anfangs angelegte Druck von 500 mbar im Lauf der Reaktion auf zuletzt etwa 1 mbar erniedrigt wird, wodurch Nebenprodukte der Reaktion entzogen werden. Der erhaltene Rückstand ist bei Raumtemperatur dickflüssig. Anhand des ¹H- und ²⁹Si-NMR-Spektrums ergibt sich die mittlere Zusammensetzung des Produktes als [Me₃Si(NH-C=O-NH)_{1/2}](Me₂SiO_{1/2}(NH-C=O-NH)_{1/2}]₆₅[Me₂SiO_{2/2}]₃₃₈ Das Destillat enthält die Reaktionsnebenprodukte Trimethylchlorsilan und Hexamethyldisiloxan im molaren Verhältnis 13:1.

### Beispiel 4

Es wird eine RTV-1-Silicondichtungsmasse hergestellt. Hierzu mischt man 48,75 g α,ω-Bis(dimethoxymethylsiloxy)polydimethylsiloxan der Viskosität 1000 mm²/s, 32 g α,ω-Bis(trimethylsiloxy)polydimethyldisiloxan der Viskosität 100 mm²/s, 2 g Methyltrimethoxysilan, 4,5 g 3-Aminopropyltriethoxysilan sowie 9,5 g der in Beispiel 3 hergestellten Harnstoffreste aufweisenden Organosiliciumverbindung. Anschließend werden 9 g pyrogene Kieselsäure mit einer spezifischen Oberfläche nach BET von 150 m²/g homogen in die Masse eingearbeitet und 0,25 g Dibutylzinndiacetat eingemischt. Zuletzt wird die Mischung bei einem Druck von 10-20 mbar gerührt, um die beim Mischen eingeschlossene Luft zu entfernen.

Die so hergestellte Masse wird in Tuben luftdicht abgefüllt und bei 50°C gelagert. Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt.
Die Ergebnisse sind in Tabelle 1 zusammengefaßt.

### Vergleichsbeispiel 1

Die in Beispiel 4 beschriebene Arbeitsweise wird wiederholt mit der Abänderung, daß keine Harnstoffreste aufweisende Organosiliciumverbindung eingesetzt wird.
Die Ergebnisse sind in Tabelle 1 zusammengefaßt.

### Beispiel 5

Die in Beispiel 4 beschriebene Arbeitsweise wird wiederholt mit der Abänderung, daß anstelle von 9,5 g der in Beispiel 3 hergestellten Harnstoffreste aufweisenden Organosiliciumverbindung 6,3 g der in Beispiel 2 hergestellten Harnstoffreste aufweisenden Organosiliciumverbindung eingesetzt werden. Die Ergebnisse sind in Tabelle 1 zusammengefaßt.

### Beispiel 6

Die in Beispiel 4 beschriebene Arbeitsweise wird wiederholt mit der Abänderung, daß anstelle von 9,5 g der in Beispiel 3 hergestellten Harnstoffreste aufweisenden Organosiliciumverbindung 2,8 g der in Beispiel 1 hergestellten Harnstoffreste aufweisenden Organosiliciumverbindung eingesetzt werden. Die Ergebnisse sind in Tabelle 1 zusammengefaßt.

| Beispiel | nach Herstellung | | nach 2 Wochen | | nach 4 Wochen | | nach 8 Wochen | | nach 12 Wochen | |
|---|---|---|---|---|---|---|---|---|---|---|
| | HBZ | Shore A | HBZ | Shore A | HBZ | Shore A | HBZ | Shore A | HBZ | Shore A |
| 4 | 9 Min. | 20-25 | 5 Min. | 22-23 | 6 Min. | 23-24 | 6 Min. | 20-25 | 4 Min. | 19-22 |
| V1 | 5 Min. | 25-27 | > 24 Std. | n.m. | k.V. | n.m. | k.V. | n.m. | k.V. | n.m. |
| 5 | 12-17 Min | 20 | < 6 Min | 20-25 | 3-6 Min | 20 | 5 Min | 18-22 | 4-6 Min | 20 |
| 6 | 40-45 Min | 10-15 | 50-60 Min | 9-12 | 45-50 Min | 11-14 | 45-55 Min | 10-13 | 40-50 Min | 11-15 |
| Legende: HBZ = Hautbildungszeit k.V. = keine Vernetzung nach 7 Tagen Lagerung an Luft n.m. = nicht meßbar ; Min. = Minuten; Std. = Stunden | | | | | | | | | | |

### Beispiel 7

In einem Exsikkator wird bei Normaldruck und Raumtemperatur eine Schale mit 5 g Wasser gestellt. Dazu gibt man eine zweite Schale mit 100 g der in Beispiel 1 hergestellten Harnstoffreste aufweisenden Organosiliciumverbindung. Dann verfolgt man die Veränderung der Luftfeuchtigkeit, d.h. des Wassergehalts der Atmosphäre, im Exsikkator. Die Luftfeuchtigkeit nimmt von anfänglich 65 % ab auf
- 35 % nach 1 Tag,
- 18 % nach 2 Tagen,
- 5 % nach 5 Tagen und
- 0 % nach 10 Tagen.
Harnstoffreste aufweisenden Organosiliciumverbindung setzt sich dabei um zu Harnstoff und Polydimethylsiloxan.

### Beispiel 8

Beispiel 7 wird wiederholt mit der Abänderung, daß anstelle von 5 g Wasser 5 g Methanol verwendet werden.
Nach 10 Tagen ist kein Methanol,mehr in der Atmosphäre nachweisbar.
Die Harnstoffreste aufweisende Organosiliciumverbindung setzt sich dabei um zu Harnstoff, Trimethylmethoxysilan sowie zu Homologen der Reihe MeO-(SiMe₂O)ₙSiMe₂-OMe mit n = 0, 1, 2, 3, 4, 5, 6, 7.

## Patentansprüche

1. Organosiliciumverbindungen mit mindestens drei Siliciumatomen aus Einheiten der Formel
RₐSi(NR¹C=ONR² ₂)ₖ(NR³C-ONR⁴)_{t/2}YₘO_{n/2}[(CR⁵ ₂)ₛ]_{r/2} (I)
mit Y gleich Einheiten der Formel
-SiR⁶ _{3-p-q}(NR¹C=ONR² ₂)ₚ(NR³C=ONR⁴)_{q/2} (II),
wobei R, R¹, R², R³, R⁴, R⁵ und R⁶ unabhängig voneinander jeweils gleich oder verschieden sein können und Wasserstoffatom oder gegebenenfalls substituierte einwertige Kohlenwasserstoffreste mit 1 bis 20 Kohlenstoffatomen bedeuten,
a 0, 1, 2 oder 3 ist,
k 0, 1, 2 oder 3 ist,
t 0, 1, 2, 3 oder 4 ist,
n 0, 1, 2, 3 oder 4 ist,
m 0 oder 1 ist,
r 0 oder 1 ist,
s eine ganze Zahl von 1 bis 20 darstellt,
p 0, 1, 2 oder 3 ist und
q 0, 1, 2 oder 3 ist, mit der Maßgabe, daß
- die Summe p + q ≤ 3 ist,
- die Summe a + k + t + m + n + r gleich 4 ist,
- die Summe m + r gleich 0 oder 1 ist und
- die erfindungsgemäße Organosiliciumverbindung mindestens eine Einheit der Formel (I) mit t verschieden 0 enthält.

2. Organosiliciumverbindungen gemäß Anspruch 1, dadurch gekennzeichnet, daß r gleich 0 ist.

3. Organosiliciumverbindungen gemäß Anspruch 1 oder 2, dadurch gekennzeichnet, daß r=m=0 ist.

4. Verfahren zur Herstellung von Organosiliciumverbindungen gemäß Anspruch 1 durch Umsetzung von Harnstoff(derivaten) der
Formel 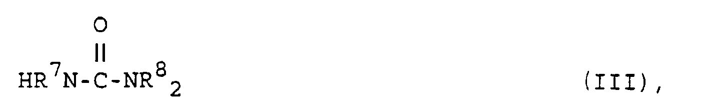 wobei R⁷ und R⁸ gleich oder verschieden sein können und jeweils unabhängig voneinander eine für R¹, R², R³ und R⁴ oben angegebene Bedeutung haben, mit der Maßgabe, daß mindestens eine Verbindung der Formel (III) mit mindestens einem Rest R⁸ gleich Wasserstoffatom eingesetzt wird,
mit Chlorresten aufweisenden Organosilciumverbindungen aus Einheiten der Formel
RₐSiO_{n/2}Yₘ[(CR⁵ ₂)ₛ]_{r/2}Clᵤ (IV),
wobei R, R⁵, Y, a, n, m, r und s jeweils gleich oder verschieden sein können und eine oben dafür angegebene Bedeutung haben sowie u 0, 1, 2, 3 oder 4 ist, mit der Maßgabe, daß die Summe a+n+m+r+u gleich 4 ist und mindestens eine Verbindung aus Einheiten der Formel (IV) mit mindestens einem Chloratom pro Molekül vorhanden ist,
unter Abspaltung von HCl.

5. Verfahren zur Herstellung der Organosilciumverbindungen gemäß Anspruch 1, dadurch gekennzeichnet, daß
in einem 1. Schritt
Chlorreste aufweisende Organosiliciumverbindungen aus Einheiten der Formel (IV), mit der Maßgabe, daß die Summe a+n+m+r+u gleich 4 ist und mindestens eine Verbindung aus Einheiten der Formel (IV) mit mindestens einem Chloratom pro Molekül vorhanden ist, mit Aminoverbindungen der Formel
R⁹ ₂NH (V)
umgesetzt werden, wobei R⁹ gleich oder verschieden sein kann und eine für Rest R angegebene Bedeutung hat, und
in einem 2. Schritt
die im 1. Schritt erhaltenen Organosiliciumverbindungen mit Harnstoff(derivaten) der Formel (III), mit der Maßgabe, daß mindestens eine Verbindung der Formel (III) mit mindestens einem Rest R⁸ gleich Wasserstoffatom eingesetzt wird, gegebenenfalls in Anwesenheit von Katalysator umgesetzt werden.

6. Verfahren zur Herstellung der Organosiliciumverbindungen gemäß Anspruch 1 durch Umsetzung von silylierten Harnstoff(derivaten) der Formel 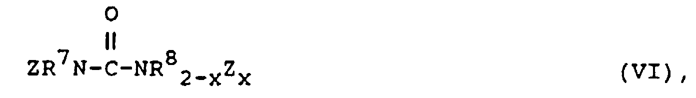 wobei R⁷ und R⁸ eine der oben dafur angegebenen Bedeutungen haben, Z ein Silylrest bedeutet und x 0 oder 1 ist, mit der Maßgabe, daß die Verbindung der Formel (VI) maximal 2 Siliciumatome aufweist und mindestens eine Verbindung der Formel (VI) mit x=1 eingesetzt wird,
mit Chlorresten aufweisenden Organosilciumverbindungen aus Einheiten der Formel (IV), mit der Maßgabe, daß die Summe a+n+m+r+u gleich 4 ist und mindestens eine Verbindung aus Einheiten der Formel (IV) mit mindestens einem Chloratom pro Molekül vorhanden ist.

7. Unter Ausschluß von Feuchtigkeit lagerfähige und bei Zutritt von Feuchtigkeit bei Raumtemperatur unter Abspaltung von Alkoholen zu Elastomeren vernetzbare Organopolysiloxanmassen auf der Basis von
(A) Polydiorganosiloxanen mit mindestens zwei Organyloxyresten an einer jeden Endgruppe,
gegebenenfalls
(B) organyloxyfunktionellen Vernetzern mit mindestens drei Organyloxygruppen
und gegebenenfalls
(c) Kondensationskatalysatoren,
dadurch gekennzeichnet, daß sie mindestens eine
(D) Organosiliciumverbindung gemäß Anspruch 1 enthalten.

8. Formkörper, hergestellt durch Vernetzung der Massen gemäß Anspruch 7.

9. Verwendung der Organosiliciumverbindungen gemäß Anspruch 1 zur Entfernung protischer Verbindungen oder Gruppen.

## Claims

1. Organosilicon compounds having at least three silicon atoms, of units of the formula
RₐSi(NR¹C=ONR² ₂)ₖ(NR³C=ONR⁴)_{t/2}YₘO_{n/2}[(CR⁵ ₂)ₛ]_{r/2} (I)
where Y is units of the formula
-SiR⁶ _{3-p-q}(NR¹C=ONR² ₂)ₚ(NR³C=ONR⁴)_{q/2} (II),
in which R, R¹, R², R³, R⁴, R⁵ and R⁶ independently of one another can in each case be identical or different and are a hydrogen atom or optionally substituted monovalent hydrocarbon radicals having 1 to 20 carbon atoms,
a is 0, 1, 2 or 3,
k is 0, 1, 2 or 3,
t is 0, 1, 2, 3 or 4,
n is 0, 1, 2, 3 or 4,
m is 0 or 1,
r is 0 or 1,
s is an integer from 1 to 20,
p is 0, 1, 2 or 3 and
q is 0, 1, 2 or 3, with the proviso that
- the sum p + q is ≤ 3,
- the sum a + k + t + m + n + r is 4,
- the sum m + r is 0 or 1 and
- the organosilicon compound according to the invention contains at least one unit of the formula (I) where t is other than 0.

2. Organosilicon compounds according to Claim 1, characterized in that r is 0.

3. Organosilicon compounds according to Claim 1 or 2, characterized in that r=m=0.

4. Process for the preparation of the organosilicon compounds according to Claim 1 by reaction of urea (derivatives) of the formula 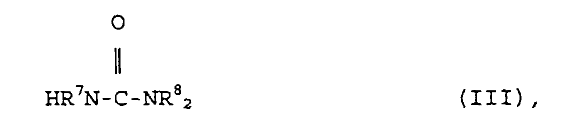 in which R⁷ and R⁸ can be identical or different and in each case independently of one another have a meaning given above for R¹, R², R³ and R⁴, with the proviso that at least one compound of the formula (III) having at least one radical R⁸ which is a hydrogen atom is employed,
with organosilicon compounds containing chlorine radicals, of units of the formula
RₐSiO_{n/2}Yₘ[(CR⁵ ₂)ₛ]_{r/2}Clᵤ (IV),
in which R, R⁵, Y, a, n, m, r and s can in each case be identical or different and have a meaning given above for these symbols, and u is 0, 1, 2, 3 or 4, with the proviso that the sum a+n+m+r+u is 4 and at least one compound of units of the formula (IV) having at least one chlorine atom per molecule is present,
HCl being split off.

5. Process for the preparation of the organosilicon compounds according to Claim 1, characterized in that
in a 1st step
reacting organosilicon compounds containing chlorine radicals, of units of the formula (IV), with the proviso that the sum a+n+m+r+u is 4, and at least one compound of units of the formula (IV) having at least one chlorine atom per molecule is present, are reacted with amino compounds of the formula
R⁹ ₂NH (V)
in which R⁹ can be identical or different and has a meaning given for the radical R, and
in a 2nd step
the organosilicon compounds obtained in the 1st step are reacted with urea (derivatives) of the formula (III), with the proviso that at least one compound of the formula (III) having at least one radical R⁸ which is a hydrogen atom is employed, if appropriate in the presence of catalysts.

6. Process for the preparation of the organosilicon compounds according to Claim 1 by reaction of silylated urea (derivatives) of the formula 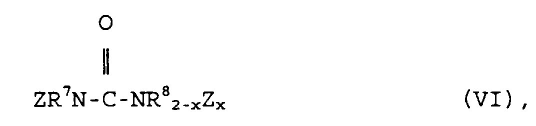 in which R⁷ and R⁸ have one of the meanings given above for these radicals, Z is a silyl radical and x is 0 or 1, with the proviso that the compound of the formula (VI) contains not more than 2 silicon atoms and at least one compound of the formula (VI) where x=1 is employed, with organosilicon compounds containing chlorine radicals, of units of the formula (IV), with the proviso that the sum a+n+m+r+u is 4 and at least one compound of units of the formula (IV) having at least one chlorine atom per molecule is present.

7. Organopolysiloxane compositions which can be stored with exclusion of moisture and on access of moisture can be crosslinked at room temperature to give an elastomer, an alcohol being split off, and are based on
(A) polydiorganosiloxanes having at least two organyloxy radicals on each end group,
if appropriate
(B) organyloxyfunctional crosslinking agents having at least three organyloxy groups
and, if appropriate,
(C) condensation catalysts,
characterized in that they comprise at least one
(D) organosilicon compound according to Claim 1.

8. Shaped articles prepared by crosslinking the compositions according to Claim 7.

9. Use of the organosilicon compounds according to Claim 1 for removing protic compounds or groups.

## Revendications

1. Composés organosiliciés comprenant au moins trois atomes de silicium, constitués d'unités de formule
RₐSi (NR¹C=ONR² ₂)ₖ(NR³C=ONR⁴)_{t/2}YₘO_{n/2}[(CR⁵ ₂)ₛ]_{r/2} (I)
avec Y étant égal à des unités de formule
- SiR⁶ _{3-p-q}(NR¹C=ONR² ₂)ₚ(NR³C=ONR⁴)_{q/2} (II),
où R, R¹, R², R³, R⁴, R⁵ et R⁶ peuvent être, indépendamment l'un de l'autre, identiques ou différents et signifient un atome d'hydrogène ou des radicaux hydrocarbonés, le cas échéant substitués, monovalents, comprenant 1 à 20 atomes de carbone,
a est égal à 0, 1, 2 ou 3,
k est égal à 0, 1, 2 ou 3,
t est égal à 0, 1, 2, 3 ou 4,
n est égal à 0, 1, 2, 3 ou 4,
m est égal à 0 ou 1,
r est égal à 0 ou 1,
s représente un nombre entier de 1 à 20,
p est égal à 0, 1, 2 ou 3 et
q est égal à 0, 1, 2 ou 3, sous réserve
- que la somme p+q soit ≤ à 3,
- que la somme a+k+t+m+n+r soit égale à 4,
- que la somme m+r soit égale à 0 ou 1 et
- que le composé organosilicié selon l'invention contienne au moins une unité de formule (I) avec t différent de 0.

2. Composés organosiliciés selon la revendication 1, caractérisés en ce que r est égal à 0.

3. Composés organosiliciés selon la revendication 1 ou 2, caractérisés en ce que r=m=0.

4. Procédé pour la préparation de composés organosiliciés selon la revendication 1 par transformation (de dérivés) d'urée de formule 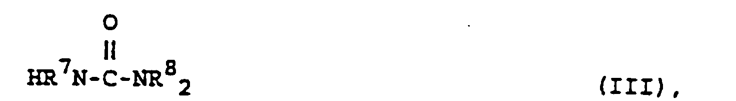 où R⁷ et R⁸ peuvent être identiques ou différents et présenter, indépendamment l'un de l'autre, une signification indiquée ci-dessus pour R¹, R², R³ et R⁴, sous réserve qu'on utilise au moins un composé de formule (III) comprenant au moins un radical R⁸ représentant un atome d'hydrogène,
avec des composés organosiliciés présentant des radicaux chlorés constitués d'unités de formule
RₐSiO_{n/2}Yₘ[(CR⁵ ₂)ₛ]ᵣClᵤ (IV)
où R, R⁵, Y, a, n, m, r et s peuvent être à chaque fois identiques ou différents et présentent une signification indiquée ci-dessus pour ces radicaux et valeurs et u est égal à 0, 1, 2, 3 ou 4, sous réserve que la somme a+n+m+r+u soit égale à 4 et qu'au moins un composé constitué d'unités de formule (IV) comprenant au moins un atome de chlore par molécule soit présent, avec séparation de HCl.

5. Procédé pour la préparation des composés organosiliciés selon la revendication 1, caractérisé en ce qu'on transforme dans une première étape des composés organosiliciés présentant des radicaux chlorés, constitués d'unités de formule (IV), sous réserve que la somme a+n+m+r+u soit égale à 4 et qu'au moins un composé constitué d'unités de formule (IV) comprenant au moins un atome de chlore par molécule soit présent, avec des composés amino de formule
R⁹ ₂NH (V)
où R⁹ peut être identique ou différent et présente une signification indiquée pour le radical R et, dans une deuxième étape
les composés organosiliciés obtenus dans la première étape avec de l'urée (ou des dérivés de l'urée) de formule (III), sous réserve qu'on utilise au moins un composé de formule (III) comprenant au moins un radical R⁸ représentant un atome d'hydrogène, le cas échéant en présence d'un catalyseur.

6. Procédé pour la préparation de composés organosiliciés selon la revendication 1 par transformation d'urée (ou de dérivés de l'urée) silylée de formule 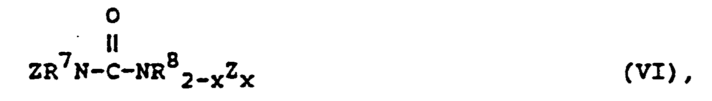 où R⁷ et R⁸ présentent une des significations indiquées ci-dessus pour ces radicaux, Z signifie un radical silyle et x est égal à 0 ou 1, sous réserve que le composé de formule (VI) présente au maximum deux atomes de silicium et qu'on utilise au moins un composé de formule (VI) avec x=1,
avec des composés organosiliciés présentant des radicaux chlorés de formule (IV), sous réserve que la somme a+n+m+r+u soit égale à 4 et qu'au moins un composé constitué d'unités de formule (IV) comprenant au moins un atome de chlore par molécule soit présent.

7. Masses d'organopolysiloxane entreposables à l'abri de l'humidité et réticulables en élastomères en cas d'arrivée d'humidité à température ambiante avec séparation d'alcool, à base
(A) de polydiorganosiloxanes comprenant au moins deux radicaux organyloxy sur chaque groupement terminal,
le cas échéant,
(B) des réticulants organyloxyfonctionnels présentant au moins trois groupes organyloxy
et le cas échéant,
(C) de catalyseurs de condensation, caractérisées en ce qu'elles contiennent au moins
(D) un composé organosilicié selon la revendication 1.

8. Corps moulés, préparés par réticulation des masses selon la revendication 7.

9. Utilisation des composés organosiliciés selon la revendication 1 pour l'élimination de composés ou de groupements protiques.
